# EUROPÄISCHE PATENTANMELDUNG

(11) **EP 3 372 068 A1**
(43) Veröffentlichungstag der Anmeldung: **12.09.2018**
(21) Anmeldenummer: 18160060.2
(22) Anmeldetag: 05.03.2018
(51) Int. Cl.: A01F 25/16

(54) **SILOABDECKUNG**

(30) Priorität: 09.03.2017 DE 202017101359 U
(71) Anmelder: Arnegger, Andreas, 88299 Leutkirch (DE)
(72) Erfinder: Arnegger, Andreas, 88299 Leutkirch (DE)
(74) Vertreter: Pfister & Pfister Patent- und Rechtsanwälte

(57) **Zusammenfassung**

Die Erfindung betrifft eine Siloabdeckung für einen vorzugsweise im Außenbereich vorgesehenen Lagerort landwirtschaftlicher Produkte, bestehend aus einem flächigen Abdeckmaterial. Das flächige Abdeckmaterial weist mindestens einen Aufnahmeraum auf, der dafür vorgesehen ist, mit Beschwerungsmaterial befüllbar zu sein.

## Beschreibung

Die Erfindung betrifft eine Siloabdeckung für einen vorzugsweise im Außenbereich vorgesehenen Lagerort landwirtschaftlicher Produkte, bestehend aus einem flächigen Abdeckmaterial, zum Beispiel einer aus Kunststoffmaterial bestehenden Folie. Dabei ist es bekannt, auf den Feldern zum Beispiel U-förmige Aufnahmebereiche oder Lagerorte für zu silierendes landwirtschaftliches Gut wie Gras oder Mais anzulegen, dass dann bei Bedarf zur Fütterung des Viehs verwendet wird.

Diese Lagerorte sind großflächig und werden von dem flächigen Abdeckmaterial abgedeckt, das dazu dient, dass das landwirtschaftliche Gut nicht nass wird und auch nicht vorzeitig verdirbt. Um eine lagestabile Anordnung des Abdeckmaterials auf dem landwirtschaftlichen Gut zu gewährleisten ist es bekannt, das Abdeckmaterial zum Beispiel mit alten Autoreifen oder Sandsäcken zu beschweren. Gleichzeitig dient dieses Beschwerungsmaterial auch dazu, ein Wegblasen des Abdeckmaterials durch den Wind zuverlässig zu vermeiden. Der Landwirt ist dabei aufgefordert, das Abdeckmaterial händisch zu platzieren und auch das Beschwerungsmaterial händisch auszulegen, was zum einen körperlich anstrengend und zum anderen zeitlich aufwendig ist.

Die Erfindung hat es sich daher zur Aufgabe gemacht, diesen Stand der Technik zu vereinfachen und insbesondere das Auslegen und Handling einer solchen Siloabdeckung zu erleichtern.

Zur Lösung dieser Aufgabe geht die Erfindung aus von einer Siloabdeckung, wie eingangs beschrieben, und schlägt vor, dass das flächige Abdeckmaterial mindestens einen Aufnahmeraum aufweist, der dafür vorgesehen, ist mit Beschwerungsmaterial befüllbar zu sein.

Der Pfiff der Erfindung liegt darin, dass auf die große Anzahl von einzelnen Beschwerungselementen, wie alte Reifen oder Sandsäcke, wie sie in der Vergangenheit verwendet worden sind, jetzt verzichtet wird und die Siloabdeckung selber mindestens einen entsprechende Aufnahmeraum zur Verfügung stellt, der bei Bedarf mit Beschwerungsmaterial befüllbar ist. Geschickter Weise wird dabei das Befüllen maschinell unterstützt und so der Landwirt körperlich entlastet, wie auch der gesamte Abdeckprozess beschleunigt.

Des Weiteren ist in dem Vorschlag vorteilhafter Weise vorgesehen, dass in einer Transportstellung der Siloabdeckung mindestens ein Aufnahmeraum entleert ist. In der Transportstellung, wenn zum Beispiel die Siloabdeckung zum Lagerort transportiert wird, es ist nicht notwendig für eine Beschwerung zu sorgen weswegen es dann günstig ist, dass der mindestens eine Aufnahmeraum geleert ist. Insgesamt wird dann auch die Siloabdeckung leichter.

Bei einer bevorzugten Ausgestaltung des Vorschlags ist vorgesehen, dass in einer Abdeckstellung der Siloabdeckung der mindestens eine Aufnahmeraum mit Beschwerungsmaterial gefüllt ist. Die Abdeckstellung ist auch die Gebrauchsstellung, wenn also die Siloabdeckung im Einsatz ist und das landwirtschaftliche Gut am Lagerort abdeckt.

Des Weiteren ist vorgesehen, dass als Beschwerungsmaterial Schüttgut wie Sand, Kies oder Ähnliches vorgesehen ist. Der Einsatz von Schüttgut hat den Vorteil, dass dieses unter Einsatz von Fördermitteln automatisiert bewegt werden kann. Neben dem Einsatz von Schüttgut ist aber insbesondere der Einsatz einer Flüssigkeit, wie Wasser oder Salzwasser, als Beschwerungsmaterial vorgesehen. Dies hat den Vorteil, dass das Fördern eines solchen Beschwerungsmaterials sehr leicht mit Pumpen erfolgen kann. Die Verwendung von Salzwasser mit einer entsprechenden Salzkonzentration bietet im Winter die Möglichkeit, das Beschwerungsmaterial auch bei tiefen Temperaturen noch mit einer Pumpe zu fördern.

In einer vorteilhaften Ausgestaltung ist vorgesehen, dass die Siloabdeckung eine Mehrzahl voneinander abgetrennter Aufnahmeräume aufweist. Wird nur ein Teil der Siloabdeckung benötigt, zum Beispiel weil das Silo bereits zu einem Teil geleert ist, erlaubt dieser Vorschlag eine auf den Füllgrad des Silos angepasste Ausgestaltung der Siloabdeckung und gewährleistet zu jedem Befüllungsgrad des Silos immer eine ausreichende Beschwerung. Durch einen solchen Vorschlag wird der Einsatz der Siloabdeckung entsprechend erleichtert. Wird das voll abgedeckte Silo geöffnet, so wird nur ein erster Aufnahmeraum von mehreren entleert, um so einfacher an die Silage zu gelangen und auch das Handling der Siloabdeckung wird erleichtert. Die übrigen Aufnahmeräume bleiben gefüllt und bilden eine ausreichende Beschwerung, damit die Siloabdeckung durch den Wind nicht von dem Lagerort weggeblasen werden kann.

Eine ähnliche Flexibilität bei der Verwendung der Siloabdeckung wird dadurch erreicht, dass der Aufnahmeraum in eine Mehrzahl, untereinander fluidisch verbindbare und miteinander je durch ein Ventil abtrennbare Teilräume unterteilt ist.

Geschickter Weise ist vorgesehen, dass der Aufnahmeraum, insbesondere jeder Aufnahmeraum der Siloabdeckung, mit einem insbesondere verschließbaren Befüllstück verbunden ist. Durch das Befüllstück wird der Aufnahmeraum gefüllt oder entleert, er ermöglicht einen Anschluss an eine Zuleitung bzw. auch an eine Pumpe und ist selber verschließbar, um das ungewollte Austreten des Beschwerungsmaterials zu vermeiden.

In einer weiteren bevorzugten Ausführungsform ist vorgesehen, dass der Aufnahmeraum als Folienstück oder Folienschlauch ausgebildet ist, welches/welcher mit dem Abdeckmaterial verbunden, zum Beispiel verklebt, verschweißt oder vernäht ist. Geschickter Weise wird für das Material des Aufnahmeraums bzw. der den Aufnahmeraum begrenzenden Wandung das gleiche Material verwendet wie für das Abdeckmaterial selber, da dann die Verarbeitung entsprechend verbessert wird. Die Materialgleichheit erleichtert aber auch das Handling, da dann zum Beispiel das Falten oder Umschlagen der Siloabdeckung im Bereich des Aufnahmeraumes nicht behindert wird.

Des Weiteren ist günstiger Weise vorgesehen, dass das Abdeckmaterial mehrlagig ist und der Aufnahmeraum mindestens eine Kammer dieses mehrlagigen Abdeckmaterials ist. Der Vorschlag ist sehr variabel im Hinblick auf die Ausgestaltung des Aufnahmeraumes. Zunächst ist vorgesehen, ein separates Folienstück oder Folienschlauch auf das Abdeckmaterial aufzubringen, welches den Aufnahmeraum bildet. Der Aufnahmeraum kann aber auch in das Abdeckmaterial integriert sein, wenn zum Beispiel das Abdeckmaterial mehrlagig ausgebildet ist. Dabei muss sich die Mehrlagigkeit nicht über die gesamte Fläche des Abdeckmaterials erstrecken sondern es reicht aus, wenn zumindest ein gewisser Teil mehrlagig ausgebildet ist um so die den Aufnahmeraum zu bilden.

Vorteilhafter Weise ist vorgesehen, dass das Abdeckmaterial aus Kunststoff, zum Beispiel PVC, PE, faserverstärktem Kunststoff oder Ähnlichem, gebildet ist. Solche Materialien sind ausreichend wetterbeständig, stabil und kostengünstig.

Die Erfindung umfasst des Weiteren auch ein Siloabdecksystem, welches aus einer Siloabdeckung, wie beschrieben, und einem Vorratsbehälter für Beschwerungsmaterial besteht. Ein wesentlicher Vorteil der Erfindung liegt darin, dass der mindestens eine Aufnahmeraum nur in dem Umfang mit Beschwerungsmaterial zu füllen ist, wie es benötigt wird. Daher ist das Zusammenwirken der vorgeschriebenen Siloabdeckung mit einem entsprechenden Vorratsbehälter günstig und erleichtert erheblich die Arbeit des Landwirts.

Gerade der maschinelle Einsatz zum Befüllen oder Entleeren des Aufnahmeraumes stellt eine erhebliche Erleichterung bei der täglichen Arbeit des Landwirtes dar, weswegen geschickter Weise vorgeschlagen ist, dass der Vorratsbehälter eine Flüssigkeit aufnimmt und das Siloabdecksystem eine Pumpe aufweist zur wahlweisen Befüllung oder Entleerung des Vorratsbehälters bzw. des mindestens einen Aufnahmeraums. Natürlich sind zwischen Vorratsbehälter, Pumpe und Befüllstück des Aufnahmeraumes Leitungen, zum Beispiel Schläuche vorgesehen.

Oftmals befinden sich der mit der Siloabdeckung abzudeckende Silo von dem Hof des Landwirtes entfernt, auf dem Feld, zu welchem der Landwirt bevorzugter Weise mit dem Traktor fährt. Moderne Traktoren sind mit einer Vielzahl von Antrieben, aber auch Antriebselementen, wie Antriebszapfen usw. ausgestattet, die es erlauben, die Pumpe zum Umpumpen anzutreiben. So wird das Umpumpen der Flüssigkeit von dem Vorratsbehälter in den Aufnahmeraum der Siloabdeckung und zurück ermöglicht. Daher weist günstiger Weise das vorgeschlagene Siloabdecksystem in einer Variante auch ein Kraftfahrzeug, wie zum Beispiel einen Traktor auf, wobei die Pumpe vom Antrieb des Kraftfahrzeugs antreibbar ist.

In einer weiteren bevorzugten Ausführungsform ist vorgesehen, dass das Siloabdecksystem einen von einem Kraftfahrzeug, zum Beispiel einem Traktor, geschleppten Anhänger zur Aufnahme und Transport des Vorratsbehälters und der Siloabdeckung aufweist.

In der Zeichnung ist die Erfindung insbesondere in einem Ausführungsbeispiel schematisch dargestellt. Es zeigen:
- Fig. 1: in einer Draufsicht die erfindungsgemäße Siloabdeckung in Gebrauchsstellung
- Fig. 2: eine Ansicht nach Figur 1
- Fig. 3, 4, 5: jeweils in einer Draufsicht verschiedene Ausführungsbeispiele der erfindungsgemäßen Siloabdeckung

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

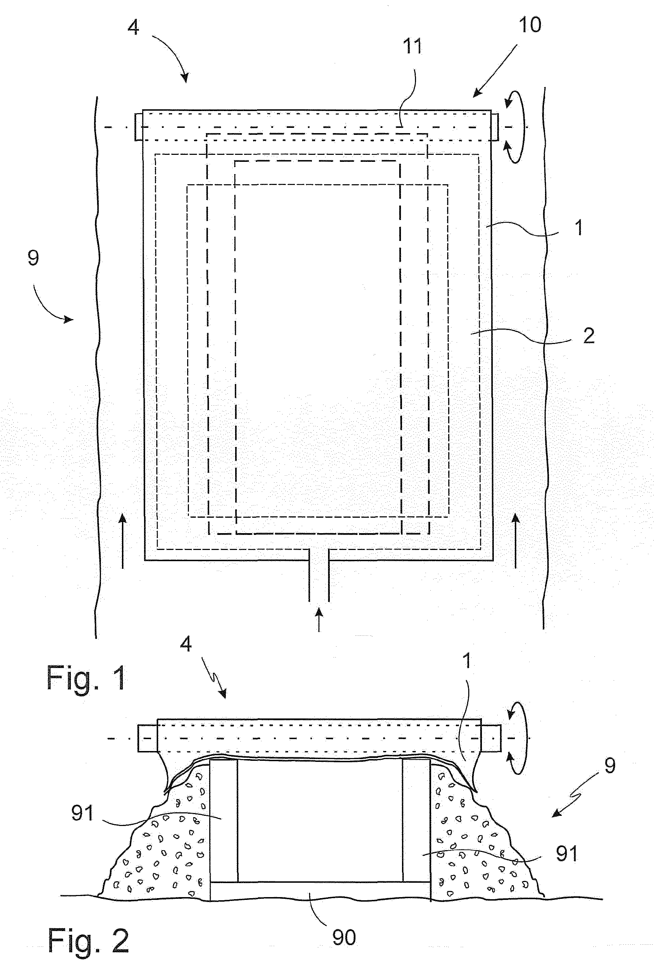

Figur 1 und Figur 2 zeigen den typischen Einsatzbereich der erfindungsgemäßen Siloabdeckung 4. Der Lagerort 9, ein typisches Feldsilo, besteht aus einer Bodenplatte 90, auf der U-förmig angeordnete Betonwände 91 den Lagerraum der Silage umgeben. An der offenen Seite ist der Lagerraum zum Einfüllen oder Entnehmen des Lagergutes zugänglich, dies ist gut in der Draufsicht nach Figur 1 zu erkennen. Die von dem Abdeckmaterial 1 der Siloabdeckung 4 verdeckten Seitenwände 91 sind gestrichelt angedeutet.

Das Abdeckmaterial 1 wird bevorzugt auf einer Rolle 10 transportiert. Mit 11 ist die Drehachse der Rolle 10 angedeutet.

In Figur 1 gestrichelt ist der Aufnahmeraum 2 angeordnet, der an den Außenseiten des flächigen, bevorzugt rechteckig ausgestalteten Abdeckmaterial 1 diesen ringförmig umgibt. Das Abdeckmaterial besteht bevorzugt aus einem Kunststoffmaterial, das wasser- und gegebenenfalls auch gasdicht ausgebildet ist.

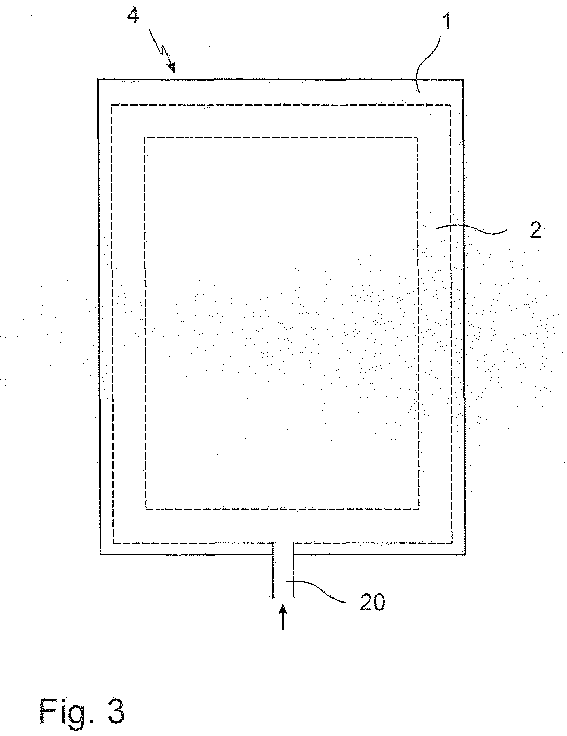

Die in Figur 1 in Gebrauchsstellung gezeigte Siloabdeckung 4 ist in Figur 3 in einer Detailansicht gezeigt. Der Aufnahmeraum 2 ist mit einem Befüllstück 20 ausgestattet, dass sich in dem hier gezeigten Ausführungsbeispiel an der kürzeren Endseite der Siloabdeckung 4 befindet. In Gebrauchsstellung befindet sich das Befüllstück 20 dabei bevorzugt an der offenen Seite des Lagersilos 9 um eine leichte Zugänglichkeit zu erlauben.

Der Aufnahmeraum 2 ist dabei schlauchartig ausgebildet und über das Befüllstück 20 mit Beschwerungsmaterial, bevorzugt eine Flüssigkeit wie Wasser oder Salzwasser befüll- oder entleerbar.

Statt der ringartigen Anordnung des Aufnahmeraumes 2 ist natürlich auch eine andere Anordnung möglich, zum Beispiel eine nur längs verlaufende, auch mittige Anordnung des Aufnahmeraumes 2 ist vorgesehen.

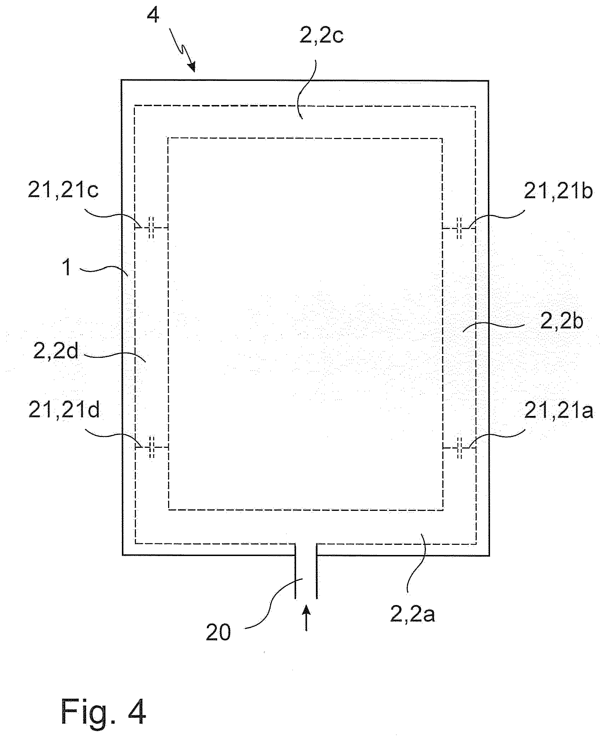

Das Ausführungsbeispiel nach Figur 4 schlägt eine Unterteilung des Aufnahmeraumes 2 in eine Mehrzahl von Teilräumen 2a bis 2d vor. In dem hier gezeigten Ausführungsbeispiel sind insgesamt vier Teilräume 2a, 2b, 2c und 2d vorgesehen. Die einzelnen Teilräume sind grundsätzlich miteinander fluidisch verbunden, es befindet sich zwischen den einzelnen Teilräumen 2a, 2b, 2c und 2d aber je ein Ventil 21, 21a, 21b, 21c, und 21d.

Das Ventil 21 ist dabei zum Beispiel als Schlauchventil, Hahn oder als Abschnürung realisiert, wobei eine Abschnürung zum Beispiel durch ein Band oder Strick realisiert wird, das bei Bedarf um den den Aufnahmeraum 2 begrenzenden Schlauch herum gelegt wird und durch eine Abschnürung die benachbarten Teilräume 2a, 2b, 2c und 2d voneinander getrennt werden. Das Befüllen oder Entleeren des Aufnahmeraumes 2 erfolgt dabei durch das zentrale Befüllstück 20. Durch die Betätigung der einzelnen Ventile 21 ist eine komfortable Bedienung möglich, der Befüllungsgrad des Aufnahmeraumes 2 ist an die jeweilige Tätigkeit am Silo und auch an den Befüllungsgrad am Silo einfach anpassbar.

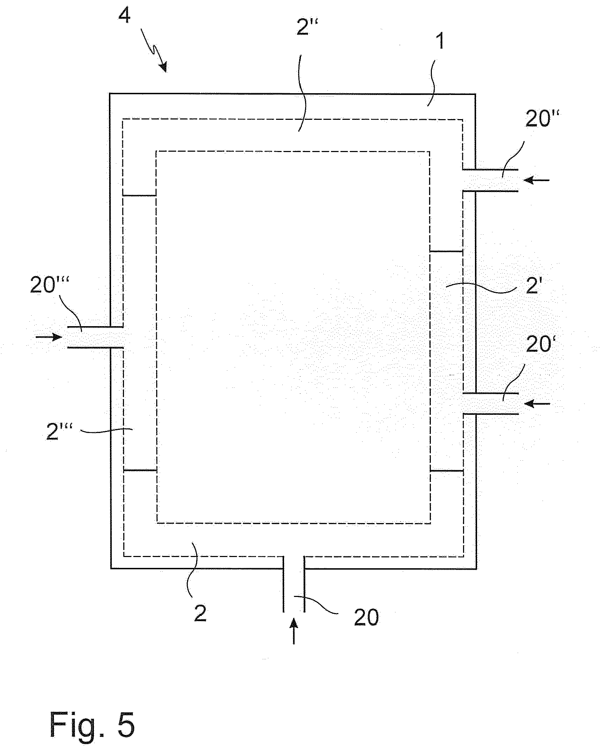

Das Ausführungsbeispiel nach Figur 5 weist eine Mehrzahl von Aufnahmeräumen 2, 2', 2", 2"' auf. Auch mit diesem Vorschlag ist eine variable Anpassung der Beschwerung der Siloabdeckung 4 an die jeweilige Tätigkeit und den Befüllungsgrad am Silo möglich. Anstelle von Ventilen zum Befüllen oder Entleeren der einzelnen Aufnahmeräumen 2, 2', 2", 2"' ist jeder Aufnahmeräumen 2, 2', 2", 2"' mit einen, vorzugsweise verschließbaren Befüllstück 20, 20', 20", 20"' ausgestattet.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Siloabdeckung für einen vorzugsweise im Außenbereich vorgesehenen Lagerort (9) landwirtschaftlicher Produkte, bestehend aus einem flächigen Abdeckmaterial (1), **dadurch gekennzeichnet, dass** das flächige Abdeckmaterial (1) mindestens einen Aufnahmeraum (2) aufweist, der dafür vorgesehen ist, mit Beschwerungsmaterial befüllbar zu sein.

2. Siloabdeckung nach Anspruch 1, **dadurch gekennzeichnet, dass** in einer Transportstellung der Siloabdeckung (4) der mindestens eine Aufnahmeraum (2) entleert ist.

3. Siloabdeckung nach einem der vorhergehenden Ansprüche, **dadurch gekennzeichnet, dass** in einer Abdeckstellung der Siloabdeckung (4) der mindestens eine Aufnahmeraum (2) mit Beschwerungsmaterial gefüllt ist.

4. Siloabdeckung nach einem der vorhergehenden Ansprüche, **dadurch gekennzeichnet, dass** als Beschwerungsmaterial Schüttgut wie Sand, Kies oder ähnliches vorgesehen ist.

5. Siloabdeckung nach einem der vorhergehenden Ansprüche, **dadurch gekennzeichnet, dass** als Beschwerungsmaterial eine Flüssigkeit wie Wasser oder Salzwasser vorgesehen ist.

6. Siloabdeckung nach einem der vorhergehenden Ansprüche, **dadurch gekennzeichnet, dass** die Siloabdeckung (4) eine Mehrzahl voneinander abgetrennter Aufnahmeräume (2' bis 2"') aufweist.

7. Siloabdeckung nach einem der vorhergehenden Ansprüche, **dadurch gekennzeichnet, dass** der Aufnahmeraum (2), insbesondere jeder Aufnahmeraum (2) der Siloabdeckung (4), mit einem insbesondere verschließbaren Befüllstück (20) verbunden ist.

8. Siloabdeckung nach einem der vorhergehenden Ansprüche, **dadurch gekennzeichnet, dass** der Aufnahmeraum (2) in eine Mehrzahl, untereinander fluidisch verbindbare und miteinander je durch ein Ventil abtrennbare (21a bis d) Teilräume (2a bis 2d) unterteilt ist.

9. Siloabdeckung nach einem der vorhergehenden Ansprüche, **dadurch gekennzeichnet, dass** der Aufnahmeraum (2) als Folienstück oder Folienschlauch ausgebildet ist, welches/welcher mit dem Abdeckmaterial (1) verbunden, zum Beispiel verklebt, verschweißt oder vernäht, ist.

10. Siloabdeckung nach einem der vorhergehenden Ansprüche, **dadurch gekennzeichnet, dass** das Abdeckmaterial (1) mehrlagig ist und der Aufnahmeraum (2) mindestens eine Kammer dieses mehrlagigen Abdeckmaterials (1) ist.

11. Siloabdeckung nach einem der vorhergehenden Ansprüche, **dadurch gekennzeichnet, dass** das Abdeckmaterial (1) aus Kunststoff, zum Beispiel PVC, PE, faserverstärktem Kunststoff oder ähnlichem, gebildet ist.

12. Siloabdecksystem, bestehend aus einer Siloabdeckung nach einem der vorhergehenden Ansprüche und einem Vorratsbehälter für Beschwerungsmaterial.

13. Siloabdecksystem nach Anspruch 12, **dadurch gekennzeichnet, dass** der Vorratsbehälter eine Flüssigkeit aufnimmt und das Siloabdecksystem eine Pumpe aufweist zur wahlweisen Befüllung oder Entleerung des Vorratsbehälters bzw. des mindestens einen Aufnahmeraums.

14. Siloabdecksystem nach einem der vorhergehenden Ansprüche 12 und 13, **dadurch gekennzeichnet, dass** das Siloabdecksystem ein Kraftfahrzeug, wie zum Beispiel einen Traktor, aufweist und die Pumpe vom Antrieb des Kraftfahrzeugs antreibbar ist.

15. Siloabdecksystem nach einem der vorhergehenden Ansprüche 12 bis 14, **dadurch gekennzeichnet, dass** das Siloabdecksystem einen von einem Kraftfahrzeug, zum Beispiel einem Traktor, geschleppten Anhänger zur Aufnahme und Transport des Vorratsbehälters und der Siloabdeckung aufweist.
